# FASCICULE DE BREVET EUROPEEN

(11) **EP 4 505 599 B1**
(45) Date de publication et mention de la délivrance du brevet: **18.03.2026**
(21) Numéro de dépôt: 23725377.8
(22) Date de dépôt: 04.04.2023
(51) Int. Cl.: H02S 40/00, E04D 13/04

(54) **STRUCTURE A PANNEAUX COMPRENANT UN DISPOSITIF ANTI-GOUTTES, ET PROCEDE DE MONTAGE D'UNE TELLE STRUCTURE**
PANEELSTRUKTUR MIT TROPFSCHUTZVORRICHTUNG UND VERFAHREN ZUR MONTAGE SOLCH EINER STRUKTUR
PANELLED STRUCTURE COMPRISING AN ANTI-DRIP DEVICE AND METHOD FOR ASSEMBLING SUCH A STRUCTURE

(30) Priorité: 04.04.2022 FR 2203045
(43) Date de publication de la demande: 12.02.2025
(73) Titulaire: Adiwatt, 41330 Fosse (FR)
(72) Inventeur: NIVOCHE, Mathieu, 41100 SAINT FIRMIN DES PRES (FR); RIVIERE, François, 41100 MAZANGE (FR)
(74) Mandataire: Cabinet Beau de Loménie
(86) Numéro de dépôt international: PCT/FR2023/050483
(87) Numéro de publication internationale: WO 2023/194685

(56) Documents cités:
- WO-A1-2020/229562
- CH-A- 198 363
- DE-U1- 202009 004 217
- DE-U1- 7 829 553
- FR-A- 466 630
- FR-A1- 2 653 856
- GB-A- 1 581 112
- US-A1- 2018 248 508
- US-A1- 2019 386 601
- US-A1- 2020 115 905
- US-B2- 8 910 433

## Description

### Domaine technique

Le présent exposé concerne une structure à panneaux comprenant au moins deux panneaux assemblés et un dispositif anti-gouttes pour recueillir du liquide pouvant s'écouler ou être présent entre ces panneaux. Il concerne encore un procédé de montage d'une telle structure à panneaux.

Les panneaux peuvent en particulier être en tout ou partie des panneaux photovoltaïques disposés sur une structure de support, par exemple pour former une partie de toiture ou une ombrière.

### Technique antérieure

Dans un assemblage de panneaux formant une surface telle qu'une surface de toiture ou une surface d'ombrière, il est souhaitable d'éviter que l'eau pouvant être reçue par cette surface ne s'écoule sous les panneaux. Pour cela, on peut faire en sorte que les panneaux soient jointifs en en contact étanche. On peut au contraire choisir que les panneaux ne soient pas jointifs mais, à la manière d'une toiture de tuiles ou d'ardoises, faire en sorte que les panneaux se chevauchent verticalement, de sorte que les bords de certains panneaux recouvrent ceux d'autres panneaux afin de diriger un écoulement d'eau vers une gouttière ou analogue.

La solution consistant à placer les panneaux jointifs et en contact étanche peut être difficile à mettre en œuvre techniquement et peu fiable, par exemple en raison des contraintes de dilatation thermique. La solution consistant à faire en sorte que les panneaux se chevauchent partiellement peut poser des difficultés pratiques. En particulier, s'agissant de panneaux photovoltaïques, cette solution revient à ombrager une partie de certains panneaux, ce qui fait perdre du rendement à l'ensemble des panneaux photovoltaïques.

Une autre solution consisterait à utiliser des bandes d'étanchéité, rapportées pour couvrir par le dessus les jonctions entre les panneaux, à la manière de parcloses. Cette solution est peu performante en matière d'étanchéité. S'agissant de panneaux photovoltaïques, elle impose d'utiliser des bandes étroites pour éviter de trop affecter le rendement énergétique. De plus, elle est délicate à mettre en œuvre, car elle nécessite que le monteur se place sur la surface supérieure des panneaux assemblés pour poser les bandes par le dessus. Cette manœuvre est relativement dangereuse et risque d'endommager les panneaux.

Le document CH 198 363 divulgue une structure à panneaux comprenant un canal de tôle pouvant s'accrocher sur une bande en tôle d'acier, accrochée sur un support à l'aide d'un crochet à écrou.

Le document FR 2 653 856 divulgue une structure à cadres métalliques ayant des joints collecteurs clipsés dans des rainures.

Le présent exposé vise à proposer un dispositif anti-gouttes pour un assemblage de panneaux, pouvant être mis en œuvre de manière simple et peu coûteuse, et évitant au moins substantiellement les inconvénients exposés ci-dessus.

### Exposé de l'invention

Ainsi, l'invention concerne une structure à panneaux comprenant au moins deux panneaux assemblés sur un support de telle sorte qu'une zone de jonction soit délimitée entre des bords longitudinaux en regard des panneaux et entre des surfaces porteuses respectives qui s'étendent sous la surface des panneaux, la structure comprenant un dispositif anti-gouttes comprenant un joint collecteur qui comprend un tube creux fendu, ce tube présentant une paroi de fond collectrice et une fente longitudinale qui délimite des bords de montage ; le tube est apte, à partir d'une position de repos dans laquelle la fente présente une largeur minimale de repos, à être déformé élastiquement pour élargir la fente en écartant les bords de montage et pour insérer les surfaces porteuses dans le tube, les bords de montage étant en permanence rappelés l'un vers l'autre de manière à rester naturellement accrochés sur les surfaces porteuses qui portent les bords de montage alors que la paroi de fond collectrice recouvre la zone de jonction par le dessous.

Le joint collecteur constitue un élément structurellement simple et facile à fabriquer à moindre coût. Pour sa mise en place avec l'assemblage de panneaux, il suffit de déformer élastiquement le tube creux fendu pour élargir la fente de manière à faire passer dans cette fente des moyens de retenue par rapport aux panneaux puis de relâcher le tube faisant ainsi en sorte que les bords de la fente restent naturellement accrochés sur ces moyens de retenue. Le montage est aisé et simple.

On comprend que le tube du joint collecteur forme une sorte de gouttière qui vient recouvrir la zone de jonction par le dessous. Ce tube est simplement retenu par rapport aux panneaux par le fait que les bords de montage sont portés par les surfaces porteuses. La mise en place du joint collecteur par le dessous permet un montage aisé, sans nécessiter de manœuvre périlleuse pour le monteur et sans risque d'endommager les panneaux. Le tube est mis en place par un écartement des bords de la fente, directement par-dessous les surfaces porteuses sans nécessiter d'espace de dégagement en bout de la zone de jonction, tel que l'espace que pourrait nécessiter un tube qui serait mis en place par coulissement. Les bords montage sont retenus naturellement accrochés sur les surfaces porteuses, sans exiger de liaison mécanique de retenue telle qu'un vissage ou un encliquetage. Le montage est extrêmement simple et ne nécessite aucun mouvement complexe de la part de l'opérateur, et aucun outil ni aucune précision particulière telle que l'engagement entre des parties mâles et des parties femelles nécessité pour une liaison de clipsage. Optionnellement, le joint collecteur présente des ailes externes qui s'étendent vers l'extérieur du tube à partir des bords de montage.

Optionnellement, la largeur minimale de repos est nulle, les bords de montage étant optionnellement en partie superposés au repos.

Optionnellement, le tube est fendu de bout en bout, la fente s'étendant d'une extrémité à l'autre du tube.

Optionnellement, à au moins l'une des extrémités du tube, la paroi de fond collectrice présente un bec de déversement.

Optionnellement, la fente est située à l'opposé de la paroi de fond collectrice. Optionnellement, la paroi de fond collectrice est raccordée à la fente par des méplats, ces méplats s'étendant optionnellement jusqu'aux bords de montage. Optionnellement, la paroi de fond collectrice s'étend dans une portion du tube qui, en section transversale, forme un arc.

Optionnellement, en section transversale, le tube présente une forme en oméga.

Optionnellement, les surfaces porteuses sont respectivement solidaires des bords longitudinaux en regard des panneaux, les surfaces porteuses étant optionnellement formées sur des ailes porteuses qui s'étendent le long des bords longitudinaux en regard des panneaux.

Optionnellement, la structure comprend en outre des gouttières d'extrémité dans lesquelles s'ouvrent les extrémités du tube du joint collecteur. Optionnellement, au moins un des panneaux est un panneau photovoltaïque. L'invention concerne encore un procédé de montage d'une structure à panneaux du type défini ci-dessus. Selon ce procédé, on assemble des panneaux sur un support en ménageant une zone de jonction entre des bords longitudinaux des panneaux et entre des surfaces porteuses respectives qui s'étendent sous la surface des panneaux, on fournit un joint collecteur du type défini ci-dessus, on écarte l'un de l'autre les bords de montage du tube de ce joint collecteur de manière à insérer les surfaces porteuses dans le tube, par la fente de ce dernier, et on libère les bords de montage.

Le tube fendu creux peut par exemple être réalisé en matière plastique et être formé par extrusion puis tronçonné à la longueur souhaitée. La matière plastique est en particulier du PVC. Il peut s'agir de tout autre matériau, en particulier thermoplastique, ayant les propriétés d'élasticité requises pour que la fente puisse être élargie élastiquement. Lorsqu'il est présent, le bec de déversement peut être réalisé par une déformation, par exemple réalisée à chaud, éventuellement accompagnée d'une découpe, d'une extrémité du tube fendu. Le tube fendu présente une élasticité naturelle qui tend à le ramener en permanence vers des dimensions diamétrales réduites, c'est-à-dire à rétrécir ou refermer la fente, éventuellement par superposition de ses bords. Il présente un faible encombrement pour son stockage et peut, lors du montage, être manipulé pour ouvrir la fente et le mettre en place sous les panneaux. De plus, si la fente est naturellement refermée, plusieurs tubes peuvent être stockés ensemble sans risque de s'engager les uns dans les autres, par leurs fentes respectives.

### Brève description des dessins

D'autres caractéristiques et avantages de l'objet du présent exposé ressortiront de la description suivante d'un mode de réalisation, donné à titre d'exemple non limitatif, en référence aux figures annexées.
[Fig. 1] La figure 1 est une vue générale en perspective montrant une structure à panneaux formant en l'espèce une ombrière.
[Fig. 2] La figure 2 est une vue de dessus de la structure à panneaux, sur laquelle les panneaux sont seulement schématisés en trait interrompu.
[Fig. 3] La figure 3 est une vue en coupe verticale dans le plan III-III de la figure 2, montrant les bords en regard de deux panneaux et un dispositif selon l'invention.
[Fig.4A] La figure 4A est une vue en bout du tube fendu de ce dispositif au repos.
[Fig. 4B] La figure 4B est une vue en bout de ce tube à l'état monté.
[Fig. 5] La figure 5 est une vue de côté du tube fendu.
[Fig. 6] La figure 6 montre à titre d'exemple un assemblage de panneaux utilisant un tel tube fendu suivant une première orientation.
[Fig. 7] La figure 7 est une vue analogue à la figure 6 pour une deuxième orientation.

### Description détaillée

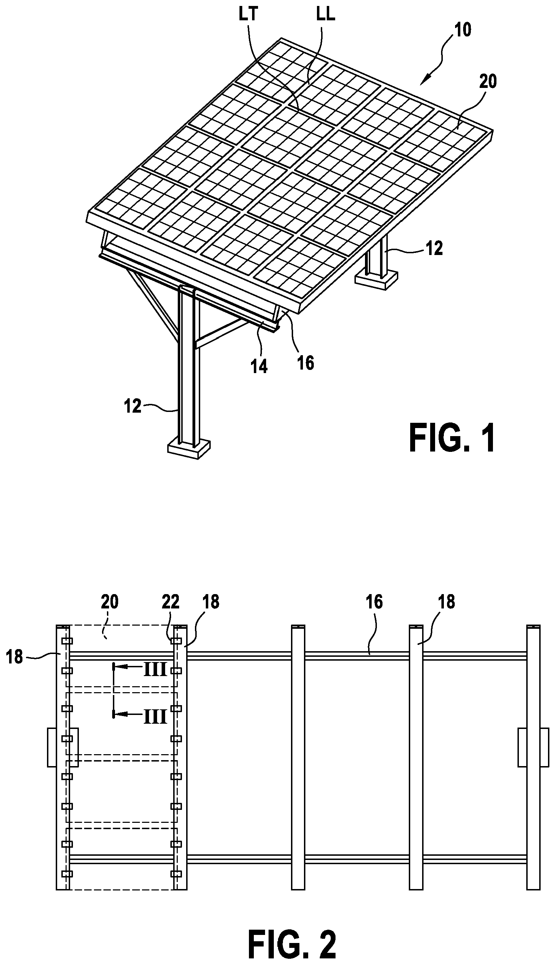

La figure 1 montre une ombrière comprenant un toit 10 porté par des poteaux de soutènement 12. Dans l'exemple représenté, les poteaux supportent des traverses 14 portant elles-mêmes des pannes 16 lesquelles peuvent porter des chevrons 18 visibles sur la figure 2. Le toit 10 de l'ombrière comprend un assemblage de panneaux 20 disposés les uns à côté des autres. En particulier, ces panneaux sont des panneaux de type photovoltaïque ; de manière générale, ils peuvent comprendre un ou plusieurs panneaux photovoltaïques. Les panneaux 20 sont assemblés sur un support qui, en l'espèce, comprend un partie de charpente de l'ombrière. Par exemple, comme le montre la figure 2, les panneaux 20 peuvent être fixés par leurs bords opposés aux chevrons 18. Ces chevrons peuvent être des profilés ou analogues sur lesquels les bords des panneaux sont fixés par des pièces de fixation 22.

L'application de l'invention à une ombrière est un exemple. De manière générale, l'invention concerne un dispositif anti-gouttes pour un assemblage de panneaux destiné à former une surface inclinée par rapport à la verticale. Cette surface peut recueillir de l'eau, en particulier de l'eau de pluie, qui s'écoule le long de cette surface mais peut également couler dans les interstices entre les panneaux.

Les jonctions entre les panneaux comprennent d'une part, des lignes de jonction transversales LT orientées selon la direction des chevrons 18 et, d'autre part, des lignes de jonction longitudinales LL orientées selon la direction des pannes.

En l'espèce, les panneaux 20 ont des formes rectangulaires. Même si l'on cherche à réduire l'espacement entre les panneaux et, en particulier, si on les rend jointifs, leurs jonctions ne sont pas nécessairement étanches et on cherche donc à collecter l'eau qui s'écoule à ces jonctions. S'agissant des lignes de jonction LT, les chevrons 18 peuvent former des gouttières qui recueillent les écoulements et les dirigent vers une extrémité de bord du toit. S'agissant des lignes de jonction longitudinales LL, un dispositif anti-gouttes particulier peut être mis en œuvre.

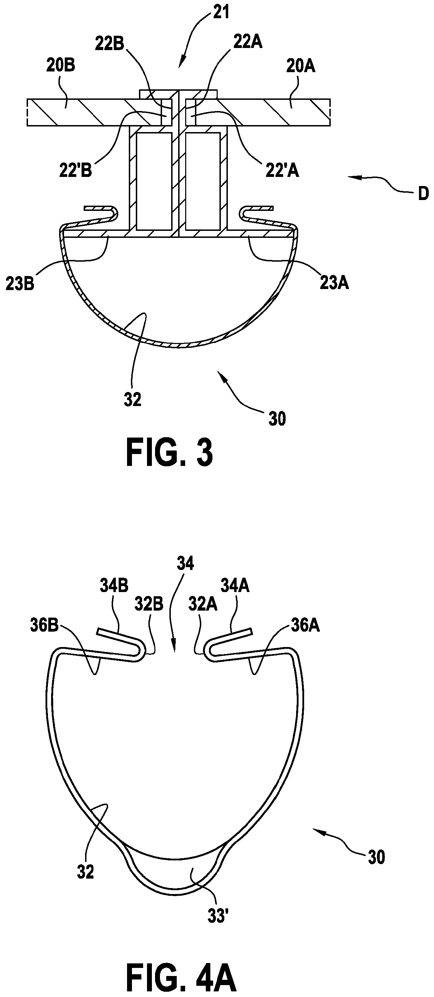

C'est ce que montre la figure 3, sur laquelle on voit des portions d'extrémité en vis-à-vis de deux panneaux 20A, 20B entre lesquelles une zone de jonction 21 est délimitée. Cette zone de jonction est en général rectiligne. Les panneaux 20A et 20B présentent des bordures, respectivement désignées par les références 22A et 22B. En particulier, ces bordures peuvent former des portions de cadre, en particulier réalisées dans des profilés, qui reçoivent les bords d'éléments photovoltaïques. On voit en effet sur la figure 3 que les bordures 22A et 22B présentent des gorges 22'A, 22'B qui reçoivent les bords des parties courantes des panneaux 20A et 20B, ces parties courantes pouvant être des éléments photovoltaïques.

On voit également sur la figure 3 que les bordures 22A, 22B comportent des surfaces porteuses respectives, respectivement 23A et 23B, qui s'étendent sous la surface des panneaux. Ainsi, pour chaque surface porteuse, un dégagement D est formé entre la surface porteuse 23A ou 23B et la face inférieure de la partie courant du panneau. En l'espèce, les surfaces porteuses sont solidaires des bords longitudinaux en regard des panneaux 20A, 20B et sont formées sur des ailes porteuses qui s'étendent le long de ces bords. Chaque surface porteuse 23A ou 23B peut être formée en une seule pièce avec le profilé qui forme la bordure 22A ou 22B, respectivement.

En l'espèce, les surfaces porteuses 23A, 23B forment des portions de parois repliées à angle droit ou sensiblement à angle droit par rapport à la portion des bordures qui coiffe le bord des parties courantes des panneaux.

Ces portions de paroi peuvent former des ailes qui peuvent être continues ou non le long des bordures respectives.

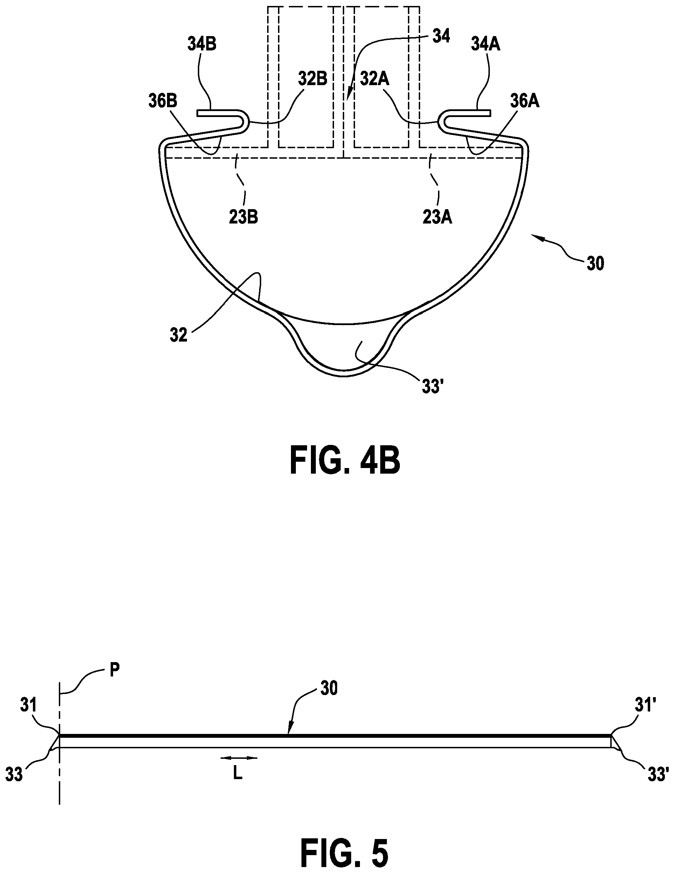

On voit sur la figure 3 qu'un joint collecteur 30 est porté par les surfaces porteuses 23A, 23B. Comme on le comprend mieux sur les figures 4A, 4B et 5, le joint collecteur est formé par un tube creux fendu qui présente une paroi de fond collectrice 32 et une fente longitudinale 34 située en regard de cette paroi de fond collectrice 32. Cette fente délimite des bords de montage 32A, 32B. Ceci signifie que la fente est ménagée entre ces bords de montage 32A et 32B.

Les bords de montage s'étendent en vis-à-vis de la paroi de fond collectrice 32. Comme on le voit sur les figures 4B et 3, à l'état monté du joint collecteur, les bords de montage 32A et 32B sont retenus sur les surfaces porteuses 23A et 23B. Ainsi, le joint collecteur 30 est porté par les surfaces porteuses 32A et 32B. Le joint collecteur 30 jouit ainsi d'un degré de liberté par rapport aux panneaux, ce qui lui permet de conserver son efficacité malgré les possibles dilatations thermiques des panneaux et de leurs bordures, en particulier sous l'effet des conditions météorologiques.

Globalement, la fente 34 s'étend en regard d'une région centrale de la paroi de fond collectrice 32.

La figure 4A montre le joint collecteur 30 au repos. On voit alors que les bords de montage sont disposés proches l'un de l'autre, c'est-à-dire que la fente 34 présente une largeur minimale de repos. Cette largeur peut même être nulle. On peut même concevoir que, au repos, les bords de montage soient en partie superposés.

Le tube creux fendu formé par le joint collecteur peut être déformé à partir de cette position de repos pour ouvrir la fente. Ainsi, la figure 4B montre la fente ouverte, alors que les bords de montage reposent sur les surfaces porteuses 23A et 23B des panneaux 20A et 20B. La déformation de la fente est élastique, de sorte que les bords de montage sont en permanence rappelés l'un vers l'autre ce qui sécurise le repos du joint collecteur sur les surfaces porteuses. Pour passer de sa position au repos à sa position de montage, le tube peut être manipulé par un opérateur qui peut simplement ouvrir la fente en écartant les bords de montage.

Le joint collecteur 30 présente en l'espèce des ailes externes 34A, 34B qui s'étendent vers l'extérieur du tube à partir des bords de montage 32A, 32B. On voit que les ailes externes s'étendent en surplomb au-dessus des portions de raccordement des bords de montage à la paroi de fond collectrice. Ces ailes externes favorisent le retour élastique vers la position de repos, et forment également des surfaces de préhension qui facilitent la manipulation de l'opérateur pour écarter la fente et disposer le joint collecteur sur les surfaces porteuses.

En l'espèce, le tube formé par le joint collecteur est fendu de bout en bout, c'est-à-dire que la fente 34 s'étend continûment d'une extrémité longitudinale 31 à l'extrémité longitudinale opposée 31'. Ainsi, les surfaces porteuses peuvent être des ailes continues ou non continues.

On voit que la paroi de fond collectrice 32 présente des becs de déversement, respectivement 33 et 33', situés aux extrémités longitudinales du tube que forme le joint collecteur 30. En l'occurrence, ces becs de déversement sont formés par des déformations locales des bouts de la paroi de fond collectrice, dans lesquelles sa concavité peut être modifiée. Par ailleurs, comme on le voit sur la figure 5, les extrémités 31 et 31' du joint collecteur peuvent être inclinées par rapport à un plan P perpendiculaire à la direction longitudinale L du tube formé par le joint collecteur. Cette inclinaison est telle que la longueur du tube mesurée dans sa paroi de fond collectrice, à l'opposé de la fente 34, est plus grande que sa longueur mesurée sur les bords de la fente 34. Ainsi, les becs de déversement 33, 33' forment des nez, en avancée dans la partie opposée à la fente 34. Comme on le voit sur les figures 3, 4A et 4B, la paroi de fond collectrice 32 est raccordée à la fente 34 (aux bords de montage 32A, 32B) par des méplats 36A, 36B. A l'état monté, ces méplats reposent sur les surfaces porteuses 23A et 23B. Ces méplats sont reliés à la paroi de fond collectrice par des coudes et s'étendent en l'occurrence jusqu'aux bords de montage 32A et 32B. En section transversale, la paroi de fond collectrice forme un arc qui peut avoir globalement la forme d'un demi-cercle ou avoir une courbure variable, par exemple une courbure plus importante dans sa partie strictement opposée à la fente 34 que dans ses zones marginales proches des méplats 36A, 36B. En section transversale, le tube présente globalement la forme de la lettre grecque oméga.

En revenant à la figure 3, on voit que le joint collecteur 30 est porté par les surfaces porteuses 23A, 23B de telle sorte que la paroi de fond collectrice 32 recouvre par le dessous la zone de jonction 21. Ainsi, l'eau s'écoulant dans la zone de jonction 21 entre les panneaux est naturellement recueillie dans le joint collecteur 30.

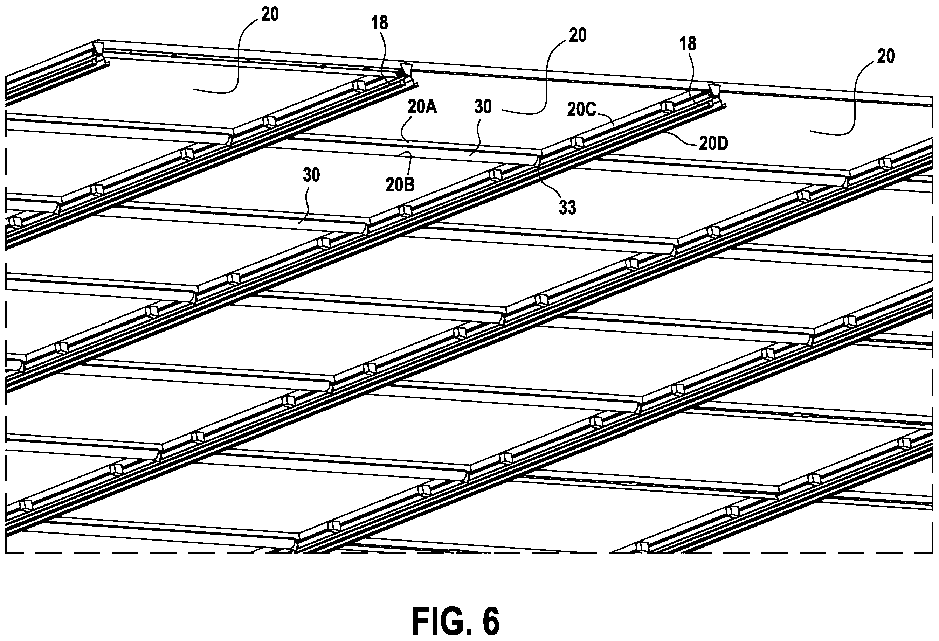

Sur la figure 6, on a représenté un assemblage de plusieurs panneaux 20 avec des joints collecteurs 30 disposés de manière à recouvrir par le dessous les zones de jonction entre les bords longitudinaux opposés 20A, 20B des panneaux. Comme indiqué précédemment, les panneaux sont portés par leurs bords transversaux par des chevrons 18. Ces chevrons peuvent former ou porter des gouttières au-dessus desquelles les bords transversaux des panneaux 20 dépassent légèrement. Ces gouttières recouvrent donc par le dessous les zones de jonction entre les bords transversaux en regard 20C, 20D des panneaux 20. Comme on le voit sur la figure 6, les extrémités des tubes formés par les joints collecteurs 30 s'ouvrent dans les gouttières collectrices des chevrons 18. On voit ainsi que les becs 33 précédemment évoqués se déversent dans ces gouttières.

Par convention, étant donné la géométrie du joint collecteur 30, on a qualifié de "longitudinale" la direction de la longueur du tube de ce joint. Ainsi, les bords 20A et 20B des panneaux coopérant avec les joints collecteurs 30 sont qualifiés de longitudinaux. Sur la figure 6, on voit que ces bords longitudinaux ont des longueurs plus importantes que celles des bords transversaux portés par les chevrons 18. Ceci est bien entendu une convention.

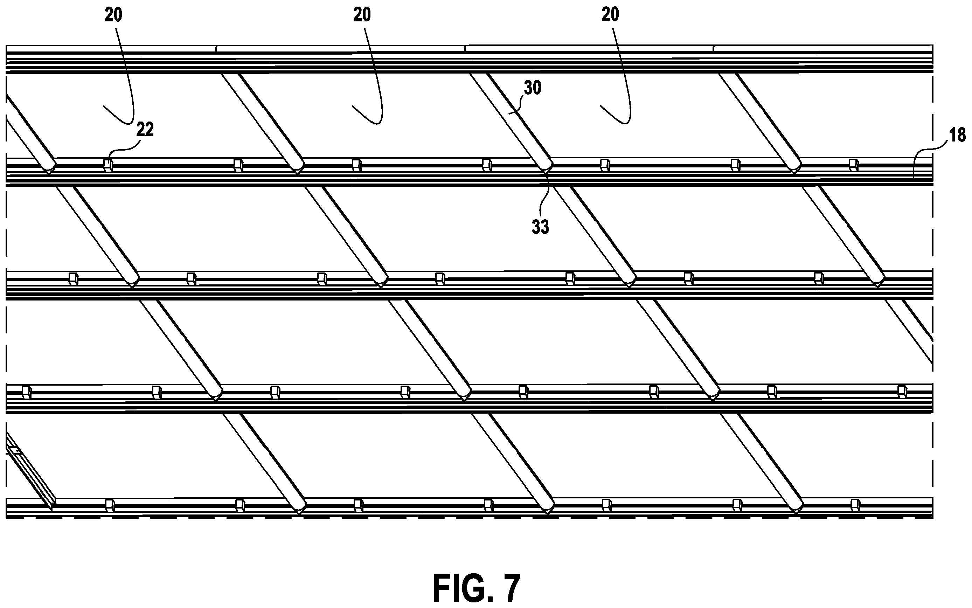

A l'inverse, on voit sur la figure 7 que les joints collecteurs 30 peuvent coopérer avec les bords des panneaux de plus faible longueur. De même, les chevrons 18 qui portent les gouttières collectrices dans lesquelles se déversent les joints collecteurs, sont par convention orientés transversalement aux pannes 16, lesquelles s'étendent selon la direction de la longueur du toit formé par l'assemblage de panneaux. Ceci peut être le cas pour les chevrons 18 des figures 6 et 7. On peut cependant concevoir que les gouttières collectrices formées entre les bords transversaux des panneaux soient orientées en fait selon la direction de la longueur du toit, par exemple en étant directement portés par des pannes 16, les bords longitudinaux des panneaux sous lesquels seraient disposés les tubes des joints collecteurs seraient en fait orientés transversalement par rapport au toit, c'est-à-dire selon la direction des chevrons.

Comme on l'a indiqué, le joint collecteur peut comprendre un tube creux fendu ou être formé par un tel tube. Ce tube peut être formé en grande longueur par exemple par extrusion, puis tronçonné à la longueur voulue, puis, par exemple à l'issue d'un chauffage, les bords de ce tube peuvent être déformés pour former les becs de déversement.

Le dispositif de l'invention est particulièrement aisé à mettre en œuvre. En effet, on peut d'abord monter les panneaux sur leur support de manière classique, en laissant des espaces entre ces panneaux ou en les montant jointifs. Même si les panneaux sont jointifs, leur contact n'est pas étanche mais laisse au moins un petit espace interstitiel dans lequel de l'eau peut s'écouler.

Une fois la structure ainsi assemblée, pour éviter les écoulements à partir des zones de jonction 21 entre les panneaux, on peut, par le dessous, placer des joints collecteurs en travers de chacune des zones de jonction concernées, simplement en amenant le tube de chaque joint collecteur sous les surfaces porteuses 23A, 23B, en écartant les bords de montage de ces tubes et en les laissant reposer sur ces surfaces porteuses.

## Revendications

1. Structure à panneaux comprenant au moins deux panneaux (20) assemblés sur un support (16, 18) de telle sorte qu'une zone de jonction (21) soit délimitée entre des bords longitudinaux en regard des panneaux (20A, 20B) et entre des surfaces porteuses respectives (23A, 23B) qui s'étendent sous la surface des panneaux, la structure comprenant un dispositif anti-gouttes comprenant un joint collecteur (30) qui comprend un tube creux fendu, ce tube présentant une paroi de fond collectrice (32) et une fente longitudinale (34) qui délimite des bords de montage (32A, 32B),
**caractérisée en ce que** le tube est apte, à partir d'une position de repos dans laquelle la fente (34) présente une largeur minimale de repos, à être déformé élastiquement pour élargir la fente en écartant les bords de montage et pour insérer les surfaces porteuses (23A, 23B) dans le tube, les bords de montage (32A,32B) étant en permanence rappelés l'un vers l'autre de manière à rester naturellement accrochés sur les surfaces porteuses (23A, 23B) qui portent les bords de montage alors que la paroi de fond collectrice (32) recouvre la zone de jonction (21) par le dessous.

2. Structure selon la revendication 1, dans laquelle les surfaces porteuses (23A, 23B) sont respectivement solidaires des bords longitudinaux en regard des panneaux, les surfaces porteuses étant optionnellement formées sur des ailes porteuses qui s'étendent le long des bords longitudinaux en regard des panneaux.

3. Structure selon la revendication 1 ou 2, dans laquelle le joint collecteur (30) présente des ailes externes (34A, 34B) qui s'étendent vers l'extérieur du tube à partir des bords de montage (32A, 32B).

4. Structure selon l'une des revendications 1 à 3, dans laquelle la largeur minimale de repos est nulle, les bords de montage étant optionnellement en partie superposés au repos.

5. Structure selon l'une des revendications 1 à 4, dans laquelle le tube est fendu de bout en bout, la fente (34) s'étendant d'une extrémité à l'autre du tube.

6. Structure selon l'une des revendications 1 à 5, dans laquelle, à au moins l'une des extrémités (31, 31') du tube, la paroi de fond collectrice (32) présente un bec de déversement (33, 33').

7. Structure selon l'une des revendications 1 à 6, dans laquelle la fente (34) est située à l'opposé de la paroi de fond collectrice (32).

8. Structure selon l'une des revendications 1 à 7, dans laquelle la paroi de fond collectrice (32) est raccordée à la fente (34) par des méplats (36A, 36B), ces méplats s'étendant optionnellement jusqu'aux bords de montage (32A, 32B).

9. Structure selon l'une des revendications 1 à 8, dans laquelle la paroi de fond collectrice (32) s'étend dans une portion du tube qui, en section transversale, forme un arc.

10. Structure selon l'une des revendications 1 à 9, dans laquelle, en section transversale, le tube présente une forme en oméga.

11. Structure selon l'une des revendications 1 à 10, comprenant en outre des gouttières d'extrémité (18) dans lesquelles s'ouvrent les extrémités du tube du joint collecteur.

12. Structure selon l'une des revendications 1 à 11, dans laquelle au moins un des panneaux (20) est un panneau photovoltaïque.

13. Procédé de montage d'une structure à panneaux selon l'une des revendications 1 à 12, dans lequel on assemble les panneaux (20) sur le support (16, 18) en ménageant la zone de jonction (21) entre des bords longitudinaux des panneaux (20A, 20B) et entre les surfaces porteuses respectives (23A, 23B) qui s'étendent sous la surface des panneaux, on écarte l'un de l'autre les bords de montage (32A, 32B) du tube du joint collecteur de manière à insérer les surfaces porteuses dans le tube, par la fente (34) de ce dernier, et on libère les bords de montage.

## Patentansprüche

1. Plattenstruktur, umfassend mindestens zwei Platten (20), die auf einem Träger (16, 18) zusammengebaut sind, sodass ein Verbindungsbereich (21) zwischen einander zugewandten Längsränder der Platten (20A, 20B) und zwischen jeweiligen tragenden Flächen (23A, 23B), die sich unter der Oberfläche der Platten erstrecken, begrenzt ist, die Struktur umfassend eine Tropfschutzvorrichtung, umfassend eine Auffangdichtung (30), die ein geschlitztes hohles Rohr umfasst, wobei dieses Rohr eine Auffangbodenwand (32) und einen Längsschlitz (34) aufweist, der Montageränder (32A, 32B) begrenzt,
**dadurch gekennzeichnet, dass** das Rohr geeignet ist, um aus einer Ruheposition, in der der Schlitz (34) eine minimale Ruhebreite aufweist, elastisch verformt zu werden, um den Schlitz durch Beabstanden der Montageränder zu erweitern und um die tragenden Flächen (23A, 23B) in das Rohr einzuführen, wobei die Montageränder (32A, 32B) ständig zueinander vorgespannt sind, um auf natürliche Weise an den tragenden Flächen (23A, 23B), die die Montageränder tragen, eingehakt bleiben, während die Auffangbodenwand (32) den Verbindungsbereich (21) von unten abdeckt.

2. Struktur nach Anspruch 1, wobei die tragenden Flächen (23A, 23B) jeweils fest mit den einander zugewandten Längsrändern der Platten verbunden sind, wobei die tragenden Flächen optional an tragenden Flügeln ausgebildet sind, die sich entlang der einander zugewandten Längsränder der Platten erstrecken.

3. Struktur nach Anspruch 1 oder 2, wobei die Auffangdichtung (30) äußere Flügel (34A, 34B) aufweist, die sich von den Montagerändern (32A, 32B) aus dem Rohr nach außen erstrecken.

4. Struktur nach einem der Ansprüche 1 bis 3, wobei die minimale Ruhebreite null ist, wobei die Montageränder im Ruhezustand optional teilweise übereinander liegen.

5. Struktur nach einem der Ansprüche 1 bis 4, wobei das Rohr durchgehend geschlitzt ist, wobei sich der Schlitz (34) von einem Ende des Rohrs zu dem anderen erstreckt.

6. Struktur nach einem der Ansprüche 1 bis 5, wobei an mindestens einem der Enden (31, 31') des Rohrs die Auffangbodenwand (32) einen Ausguss (33, 33') aufweist.

7. Struktur nach einem der Ansprüche 1 bis 6, wobei sich der Schlitz (34) gegenüber der Auffangbodenwand (32) befindet.

8. Struktur nach einem der Ansprüche 1 bis 7, wobei die Auffangbodenwand (32) durch Abflachungen (36A, 36B) mit dem Schlitz (34) verbunden ist, wobei sich die Abflachungen optional bis zu den Montagerändern (32A, 32B) erstrecken.

9. Struktur nach einem der Ansprüche 1 bis 8, wobei sich die Auffangbodenwand (32) in einen Abschnitt des Rohrs erstreckt, der im Querschnitt einen Bogen bildet.

10. Struktur nach einem der Ansprüche 1 bis 9, wobei das Rohr im Querschnitt eine Omega-Form aufweist.

11. Struktur nach einem der Ansprüche 1 bis 10, ferner umfassend Abschlussrinnen (18), in die sich die Enden des Rohrs der Auffangdichtung öffnen.

12. Struktur nach einem der Ansprüche 1 bis 11, wobei mindestens eine der Platten (20) ein Solarmodul ist.

13. Verfahren zur Montage einer Plattenstruktur nach einem der Ansprüche 1 bis 12, wobei die Platten (20) auf dem Träger (16, 18) zusammengebaut werden, wobei der Verbindungsbereich (21) zwischen den Längsrändern der Platten (20A, 20B) und zwischen den jeweiligen tragenden Flächen (23A, 23B), die sich unter der Fläche der Platten erstrecken, bereitgestellt ist, die Montageränder (32A, 32B) des Rohrs der Auffangdichtung voneinander wegbewegt werden, um die tragenden Flächen durch den Schlitz (34) des Rohrs in das Rohr einzuführen, und die Montageränder freigegeben werden.

## Claims

1. A panel structure comprising at least two panels (20) assembled on a support (16, 18) in such a way that a junction area (21) is delimited between the facing longitudinal edges of the panels (20A, 20B) and between respective bearing surfaces (23A, 23B) that extend under the surface of the panels, the structure comprising an anti-drip device comprising a collector seal (30) which comprises a split hollow tube, this tube presenting a collector bottom wall (32) and a longitudinal slot (34) that delimits the mounting edges (32A, 32B), **characterized in that** the tube is able to, from a rest position wherein the slot (34) presents a minimal rest width, of being elastically deformed to widen the slot by spreading the mounting edges and to insert the bearing surfaces (23A, 23B) into the tube, the mounting edges (32A, 32B) being permanently pulled toward each other in such a way as to remain naturally hooked onto the bearing surfaces (23A, 23B) which carry the mounting edges while the collector bottom wall (32) covers the junction area (21) from below.

2. The structure according to claim 1, wherein the bearing surfaces (23A, 23B) are respectively integral with the facing longitudinal edges of the panels, the bearing surfaces being optionally formed on bearing wings that extend along the facing longitudinal edges of the panels.

3. The structure according to claim 1 or 2, wherein the collector seal (30) presents external wings (34A, 34B) that extend toward the outside of the tube from the mounting edges (32A, 32B).

4. The structure according to one of claims 1 to 3, wherein the minimal rest width is zero, the mounting edges being optionally partially overlapped at rest.

5. The structure according to one of claims 1 to 4, wherein the tube is split from end to end, the slot (34) extending from one end to the other of the tube.

6. The structure according to one of claims 1 to 5, wherein, at least one of the ends (31, 31') of the tube, the collector bottom wall (32) presents a pouring spout (33, 33').

7. The structure according to one of claims 1 to 6, wherein the slot (34) is located opposite the collector bottom wall (32).

8. The structure according to one of claims 1 to 7, wherein the collector bottom wall (32) is connected to the slot (34) by flats (36A, 36B), these flats optionally extending to the mounting edges (32A, 32B).

9. The structure according to one of claims 1 to 8, wherein the collector bottom wall (32) extends in a portion of the tube that, in cross-section, forms an arc.

10. The structure according to one of claims 1 to 9, wherein, in cross-section, the tube presents an omega shape.

11. The structure according to one of claims 1 to 10, further comprising end gutters (18) into which the ends of the collector seal tube open.

12. The structure according to one of claims 1 to 11, wherein at least one of the panels (20) is a photovoltaic panel.

13. A method for assembling a panel structure according to one of claims 1 to 12, wherein the panels (20) are assembled on the support (16, 18) while providing the junction area (21) between the longitudinal edges of the panels (20A, 20B) and between the respective bearing surfaces (23A, 23B) that extend under the surface of the panels, the mounting edges (32A, 32B) of the collector seal tube are spread apart in such a way as to insert the bearing surfaces into the tube through the slot (34) of the latter, and the mounting edges are released.
